# EUROPEAN PATENT SPECIFICATION

(11) **EP 0 598 393 B1**
(45) Date of publication and mention of the grant of the patent: **01.03.2000**
(21) Application number: 93118513.6
(22) Date of filing: 16.11.1993
(51) Int. Cl.: G03B 17/04

(54) **Method and apparatus for removing outer case**
Verfahren und Vorrichtung zum Entfernen einer äusseren Hülle
Procédé et appareil pour éliminer une couverture extérieure

(30) Priority: 16.11.1992 JP 30566792
(43) Date of publication of application: 25.05.1994
(60) Divisional application: 98120567.7
(73) Proprietor: FUJI PHOTO FILM CO., LTD., Kanagawa-ken (JP)
(72) Inventor: Suehara, Kazuyoshi, c/o Fuji Photo Film Co., Ltd., Minami-Ashigara-shi, Kanagawa (JP); Wada, Toshiharu, c/o Fuji Photo Film Co., Ltd., Minami-Ashigara-shi, Kanagawa (JP)
(74) Representative: Grünecker, Kinkeldey, Stockmair & Schwanhäusser Anwaltssozietät

(56) References cited:
- EP-A- 0 000 469
- EP-A- 0 105 508
- DE-A- 3 833 924
- US-A- 4 571 919
- US-A- 4 884 087
- US-A- 5 015 089

## Description

### BACKGROUND OF THE INVENTION

### 1. Field of the Invention

The present invention relates to a method and apparatus for removing an outer case. More particularly, the present invention relates to an automatically removing method conveniently capable of removing from a body of a lens-fitted photo film unit a packaging formed around the body.

### 2. Description Related to the Prior Art

Lens-fitted photo film units (hereinafter referred to simply as film units) are now on the market, e.g. under the trade name "Fujicolor Quick Snap" (manufactured by Fuji Photo Film Co., Ltd.). Such known photo film units are a single-use camera preloaded with photographic filmstrip (hereinafter referred to as film), as is disclosed in U.S.P. 4,884,087 and 4,972,649. The photo film unit is handled with such convenience that, like a simple photo film cassette, it can be deposited to a photofinishing agent in its entirety.

A body of the photo film unit includes a main assembly and a rear lid, between which unexposed photo film extends from a photo film supply chamber to a cassette containing chamber horizontally. After effecting each exposure, one who uses the photo film unit winds the photo film frame by frame back into a cassette. When photography with the photo film is completed, the photo film is entirely wound up into the cassette. The photo film unit has an outer case or cardboard packaging, which packages the body of the photo film unit, is adapted to protection of the body and appearance as merchandise, and is provided with external printing for decoration and indication of information.

Public concern is now shown on recycling parts of the photo film units, in view of economical use of limited resources and protection of global environment against destruction caused by successive disposal of industrial wastes. The photofinishing agent having received the photo film unit in its entirety, a photo laboratory is supplied with a number of photo film units, opens a bottom door of each body, unloads photo film, and treats the photo film for development and printing. A manufacturer of the photo film units collectively withdraws them as emptied, separates the cardboard packaging from each body, and disassembles it for the purpose of reuse. The peeled packaging is then brought into treatment for regeneration of cardboard to be used again with the photo film units.

There are known automatic apparatuses for providing the body with packaging. It is, however, nearly impossible to construct an apparatus for removing the cardboard packaging from the body safely without scratching the body. The packaging is manually removed from the body due to practical difficulties in automation. Continuous manual removal of packagings in a large scale is performed by hard movement of operators' fingers, and tires out the operators excessively. So slow a treatment is inconsistent to efficiency in recycling, no matter how speedily other relevant recycling processes may be performed.

### SUMMARY OF THE INVENTION

US Patent, US 4 571 919 A, and the corresponding European Patent Application, EP 0 105 508 A, both disclose a method and apparatus to handle photographic disc films having the features of the preambles of claims 1 and 12. However, there is a need to further improve and to facilitate the removing process.

In view of the foregoing problems, the object of the present invention is to provide an outer case removing method and apparatus conveniently and efficiently capable of removing a body of a unit from a packaging of said unit.

This object is solved by the method of claim 1 and the apparatus of claim 12.

It is easy to construct an apparatus for removing the cardboard packaging from the body safely without scratching the body. No operation is required for removing a packaging from the body. Automated removal of packagings in a large scale is all consistent to high efficiency in recycling, and compatible to other speedy relevant recycling processes.

### BRIEF DESCRIPTION OF THE DRAWINGS

The above object and advantages of the present invention will become more apparent from the following detailed description when read in connection with the accompanying drawings, in which:
Fig. 1 is a perspective illustrating a lens-fitted photo film unit to be treated in the present invention;
Fig. 2 is a perspective illustrating the photo film unit of Fig. 1 with a rear coverage open;
Fig. 3 is an explanatory view in perspective illustrating a separating step in removing operation according to the present invention;
Fig. 4 is an explanatory view in elevation illustrating a pressing step in the removing operation;
Fig. 5 is a horizontal section illustrating a state when a blade tip is started to advance through a packaging illustrated in Fig. 2;
Fig. 6 is a perspective illustrating a state subsequent to that of Fig. 5;
Fig. 7 is a perspective illustrating another photo film unit with a rear coverage open;
Fig. 8 is a horizontal section illustrating a state when a blade tip is started to advance through a packaging illustrated in Fig. 7;
Fig. 9 is a perspective illustrating a state subsequent to that of Fig. 8.

### DETAILED DESCRIPTION OF THE PREFERRED EMBODIMENTS OF THE PRESENT INVENTION

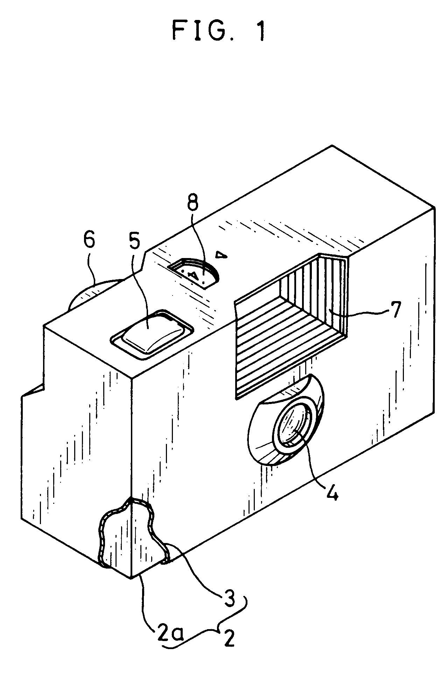

In Fig. 1 illustrating a lens-fitted photo film unit 2, a body 2a is formed from plastics, and generally packaged in an outer case or cardboard packaging 3. The packaging 3 is adapted to preservation and neat appearance of the photo film unit 2, and provided with printing of information and decoration. For photography, the packaging 3 has openings or holes for causing to appear a taking lens 4, a shutter button 5, a photo film winding wheel 6, a viewfinder window 7 and a frame number indicator window 8 for information of the number of remaining imaging frames.

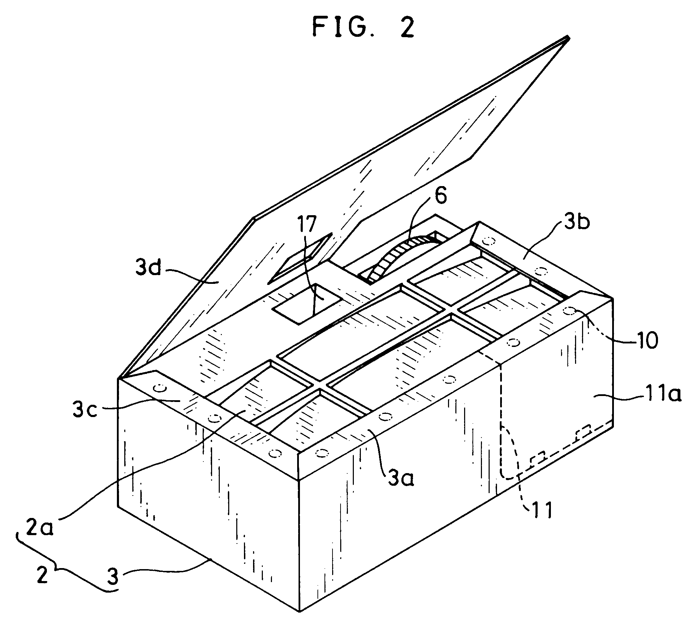

As illustrated in Fig. 2, the packaging 3 has a form of a wrapping-round type, and includes flaps 3a to 3c and a rear coverage 3d. Hot-melt adhesive agent 10 is placed on the flaps 3a to 3c, which are welded to the rear coverage 3d by heating the adhesive agent 10. The bottom of the packaging 3 covering the bottom of the body 2a is provided with a train of perforations 11, along which the packaging 3 is torn in order to take a photo film cassette (not shown) out of the body 2a.

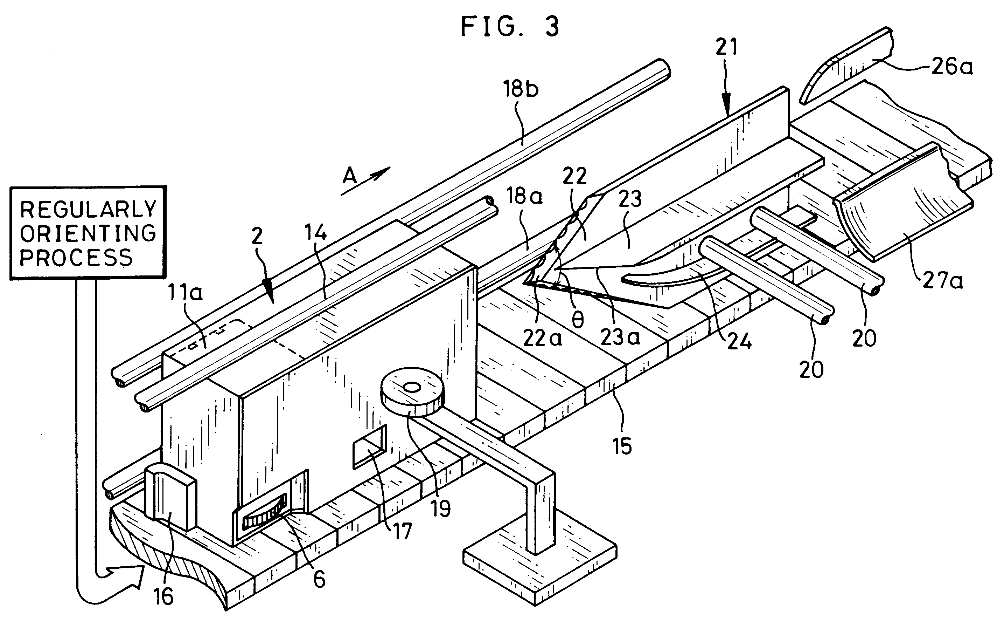

Fig. 3 illustrates a process of cutting the packaging 3 of the photo film unit 2 in a outer case removing apparatus according to the present invention. The photo film unit 2 is conveyed on a conveyor belt 15 while in contact with a stop ridge 16 formed on the belt 15. The photo film unit 2 is positioned on the belt 15 in an orientation of standing upside down and with the rear faced to the right as viewed along the conveyance of the belt 15. In other words, both the photo film winding wheel 6 and an eyepiece 17 of the viewfinder window 7 of the photo film unit 2, during conveyance, are located closely above the belt 15 and faced to the right. The photo film unit 2 on the belt 15 is clamped between a regulating roller 19 and regulating rails 18a and 18b, and prevented from being shaken by the belt 15 while vibrating in course of conveyance. The photo film unit 2 is also in contact with a support rail 14, which prevents the photo film unit 2 from shaking vertically.

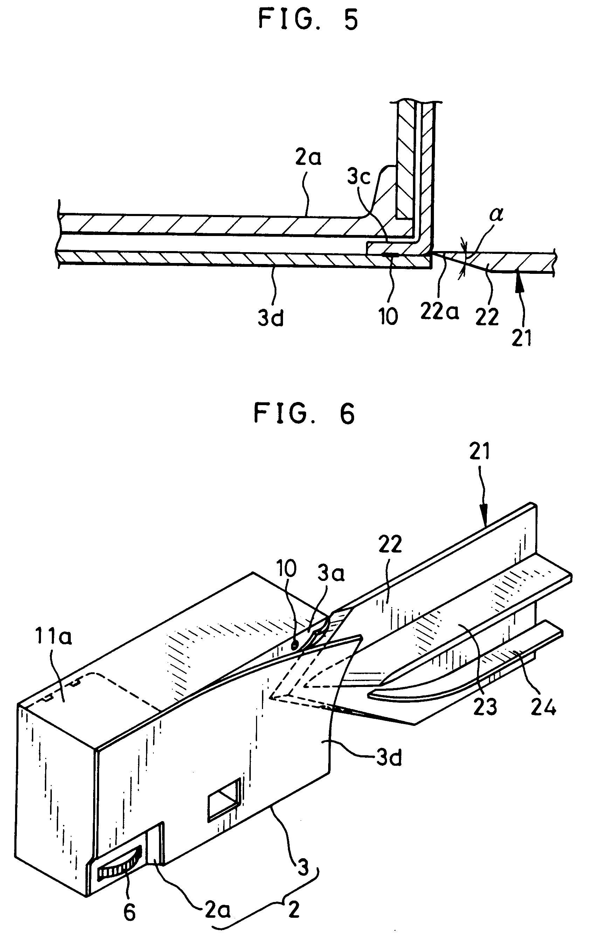

There is disposed a separator jig 21 in a position determined in the path of conveyance on the belt 15. The separator jig 21 is supported by arms 20, and is constituted of a main blade 22, a side blade 23 disposed on the main blade 22, and a guiding plate 24 under the side blade 23 for bending out the rear coverage 3d when cut and uncovered. Guiding rails 26a and 26b are disposed past the main blade 22 and located so closely to the main blade 22 as to constitute continued paths of separated portions of the packaging 3. The separator jig 21 can be constructed in modification in determining sizes, thicknesses, shapes and blade angles of the main blade 22 and the side blade 23, and a shape and position of the guiding plate 24, and an overall disposition correlated to the photo film unit 2. Such specified construction of the separator jig 21 depends on the shape and structure of the photo film unit 2 and the intensity in welding of the adhesive agent 10 on the rear coverage 3d. An angle ϑ of tapering a tip 22a of the main blade 22 as illustrated in Fig. 3 is from 60 to 150 degrees. An angle α of tapering a front edge of the main blade 22, as measured in Fig. 5, is from 20 to 50 degrees. Note that the side blade 23 according to this embodiment has a sharply tapered edge 23a, but alternatively may be a side plate which has generally the same shape and lacks any tapered edge.

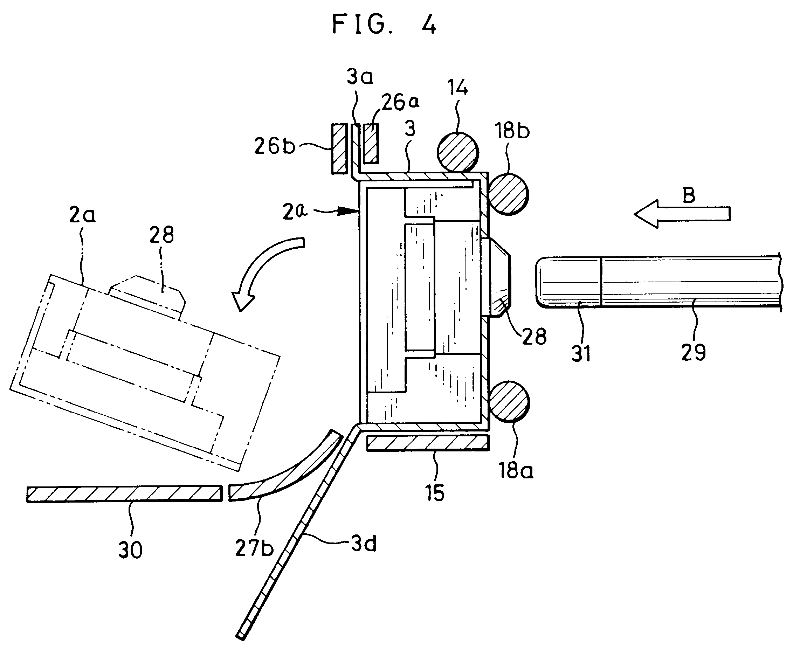

Fig. 4 illustrates a step in which the photo film unit 2 is divided into the body 2a and the packaging 3. The upward-located bottom flap 3a of the packaging 3 is bent out upward by an upper bender rail 26a. The rear coverage 3d of the packaging 3 is bent out downward by a lower bender rail 27b. Between the regulating rails 18a and 18b, a lens holder 28 of the body 2a for supporting the taking lens 4 is projected outside the packaging 3. To press the lens holder 28, a pressing pin 29 is disposed. When the pin 29 presses the lens holder 28, the pin 29 causes the body 2a to exit from the packaging 3. A base of the pressing pin 29 is linked and synchronized with the movement of the belt 15, because there is disposed a linking drive mechanism inclusive of chains and cams.

The body 2a, having been pressed out of the packaging 3, falls on to a flat conveyer belt 30 disposed alongside the lower bender rail 27b, and lies thereon. A tip of the pressing pin 29 is covered in a resinous cap 31 for the purpose of protect the body 2a from scratches. The body 2a, placed on the latter belt 30, is conveyed into the posterior disassembling process, in which the body 2a is disassembled into parts, as treatment desired for recycling lens-fitted photo film unit. The packaging 3 after removal is conveyed on the former belt 15 successively, and withdrawn as used cardboards for treatment in which the cardboards are regenerated. The belt 15 is continuously driven by a motor through all the above-described steps.

The operation of the outer case removing apparatus for the photo film unit 2 is now described. A user, having used the photo film unit 2, confirms that all his photography with the photo film unit 2 has been completed, and rotates the photo film winding wheel 6 in order to wind an exposed photo film into a cassette within the photo film unit 2, until the wheel 6 does not rotate further. Then the user brings his photo film unit 2 to a photofinishing agent, which collectively forwards such photo film units after photography to a photofinisher. The photofinisher in a photo laboratory tears the bottom of the packaging 3 along the perforation train 11, and takes out the photo film cassette with the exposed photo film.

The photo film cassettes as taken out of the photo film unit 2 is treated in development, printing and development of photographic paper, in a manner similar to photo film cassettes used in ordinary cameras. The photofinisher produces photographic prints, which are then forwarded to the user via the photofinishing agent. The photo film unit 2 after removal of the cassette is withdrawn by a manufacturer from photofinishers, and brought into the disassembling process performed in view of recycling of resources. Note that illustration of a tearable bottom portion 11a surrounded by the perforation train 11 is simplified in the drawings for convenience of understanding. A bottom door (not shown) covered by the tearable portion 11a and disposed under the cassette is broken away, or otherwise closed again, so that there be a flat or flush bottom.

The photo film unit 2, as illustrated in Fig. 3, is oriented upside down, and is placed on the belt 15 with the front face on the regulating rails 18a and 18b, so as to direct the taking lens 4 to the left of the belt 15. The photo film unit 2 is positioned on the stop ridge 16 of the belt 15, and conveyed by the belt 15 in the direction A as shown. The roller 19 disposed slightly before the separator jig 21 regulates between it and the rails 18a and 18b an orientation of the photo film unit 2 to be separated by the separator jig 21.

In course of conveyance, the photo film unit 2 is pressed against the separator jig 21. The photo film unit 2 thus positioned on the belt 15 receives the blade tip 22a in a position between the rear coverage 3d and the lateral flap 3c, as illustrated in Fig. 5. The blade tip 22a is advanced through the joint with the adhesive agent on the rear coverage 3d as illustrated in Fig. 6, and forcibly separates the rear coverage 3d from the flap 3c and then the flap 3a. The flap 3a and the coverage 3d, while forcibly separated, are peeled away and started opening, by invalidating the welding of the adhesive agent 10. It follows that the rear of the packaging 3 begins being uncovered before the edge 23a of the side blade 23 starts cutting the rear coverage 3d. Although the photo film unit 2 receives impact from the main blade 22, the photo film unit 2 is vertically regulated by the support rail 14 and prevented from accidental movement. Smooth operation of the separator jig 21 for separation is never influenced by vibration.

The photo film unit 2 of which the rear is uncovered is brought by the belt 15 into the step of pressing the body 2a out of the packaging 3. The photo film unit 2 having come past the separator jig 21 is located at the guiding rails 26a and 27a. The flap 3a and the coverage 3d are respectively bent out by the guiding rails 26a and 27a, next conveyed up to the bender rails 26b and 27b, and then bent by the bender rails 26b and 27b to open fully. In course of the conveyance of the photo film unit 2, the lens holder 28 comes to the front of the pressing pin 29. The pin 29 is moved in linkage and synchronism with the movement of the belt 15 in parallel, because of the linking drive mechanism. The pressing pin 29 while moving is moved and projected in the direction B as shown, and presses the lens holder 28 as projected over the front of the packaging 3.

The rear of the packaging 3 is uncovered to open fully. The body 2a, while the lens holder 28 receives operation of the pin 29, is pressed out of the packaging 3. The cap 31 is so resinous that the lens holder 28 is prevented from being scratched. The latter belt 30 is disposed alongside and below the former belt 15, from which the body 2a is dropped while making half a revolution, to lie with the rear face on the latter belt 30.

The body 2a lying on the belt 30 is brought to the disassembling process as treatment for recycling the photo film units. The packaging 3 after removal is withdrawn as used cardboards for regenerating the cardboards.

Note that the photo film unit 2 is regularly oriented in an orienting process before it is placed on the conveyer belt 15 for the purpose of removal of the body 2a and the packaging 3. The regularly orienting process may be constituted of three steps: for orientation in the longitudinal direction, for orientation in the vertical direction, and for obverse/reverse orientation. Alternatively, the photo film unit 2 may be oriented by manual operation regularly one after another.

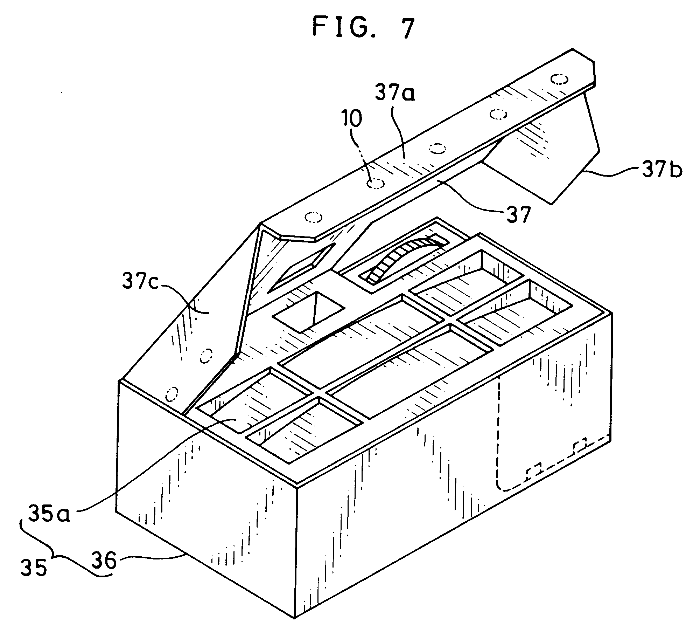

Fig. 7 illustrates another photo film unit 35 of which a body 35a is packaged in a cardboard packaging 36 having a form of a setup type. A rear coverage 37 is provided with flaps 37a to 37c, which are inserted between the body 35a and edge portions around a rear opening in the packaging 36. The flaps 37a to 37c are welded to the edge portions partly via hot-melt adhesive agent 10 and partly via water-soluble adhesive agent.

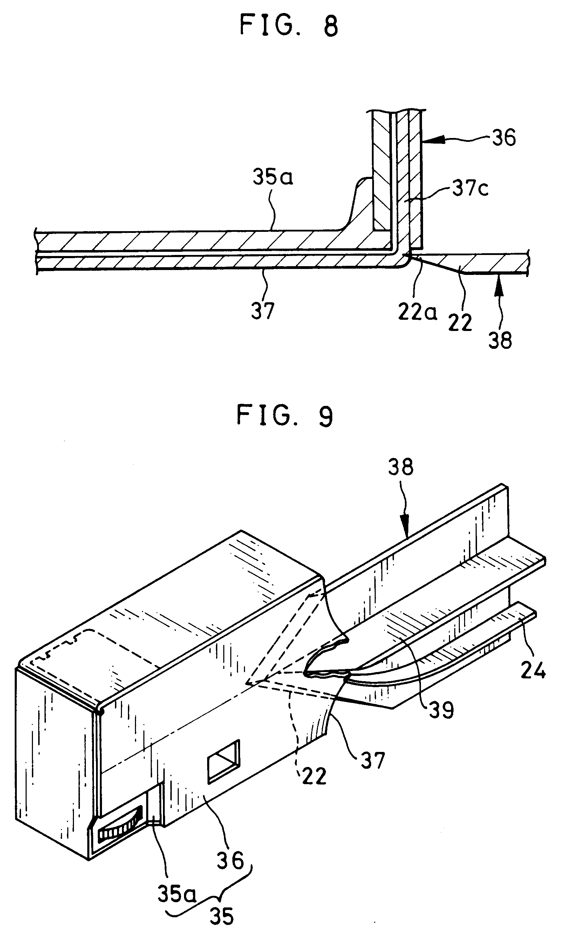

Removal of the packaging 36 from the body 35a is described now. The photo film unit 35 is placed on the belt 15 in the orientation the same as that in Fig. 3. The photo film unit 35 is conveyed by the belt 15 toward a separator jig 38. The lateral flap 37c is pierced by the blade tip 22a in a position near to and along a fold of the lateral flap 37c on the rear coverage 37, as illustrated in Fig. 8.

Further advancement of the photo film unit 35, as illustrated in Fig. 9, causes the main blade 22 to cut the flap 37c away from the rear coverage 37, and causes a side blade 39 at the same time to cut the rear coverage 37 horizontally along the phantom line as shown, to cut open the rear of the photo film unit 35. The guiding plate 24 of the separator jig 38 bends out the rear coverage 37 so as to uncover fully the rear of the photo film unit 35. Note that, should there be remaining portions on corners of the rear opening in the packaging 36, such portions would affect stability a subsequent operation of pressing the body 35a out of the packaging 36. The separator jig 38 can be constructed in modification in determining sizes, thicknesses, shapes, blade angles, and an overall disposition correlated to the photo film unit 35. The subsequent step follows, in all the same manner as that for the wrapping-round type above.

Should the beginning station of the outer case removing line be provided additionally with unpackaged photo film units as housings without packaging, no problem arises in common to all the preferred embodiments above, because the unpackaged photo film unit passes by the station of the separator jig while pressed against the regulating rails 18a, 18b by the roller 19. Although the pressing pin 29 is used for pressing the body out of the packaging, another structure such as a rotary cam, air jet, and electromagnetic solenoid may be used alternatively. The present invention is applicable, not only to lens-fitted photo film units, but also to other articles in which a body is packaged in a packaging material.

The photo film units to be treated in the above embodiments is oriented commonly upside down on the belt 15 and with the coverage directed toward the side of the separating jig. However, it is possible for the novel construction of the present invention to treat photo film units without common arrangement of their tops and bottoms, but with the coverage directed toward the separating jig, and with the body longitudinally directed along the conveyance.

Although the present invention has been fully described by way of the preferred embodiments thereof with reference to the accompanying drawings, various changes and modifications will be apparent to those having skill in this field. Therefore, unless these changes and modifications depart from the scope of the present invention as defined by the claims, they should be construed as included therein.

## Claims

1. A method of removing a body (2a,35a) of a unit (2,35) from a packaging (3,36) of said unit (2,35), said body (2a,35a) having at least a first face which is substantially flat, said packaging (3,36) including an opening and a covering portion (3d,37) for covering said first face, said opening and said covering portion (3d,37) being adjacent to said first face in an initial state in which said body (2a,35a) is packaged in said packaging (3,36), said method comprising steps of:
disposing stationary separator means (21,38) for separating said covering portion (3d,37) of said unit (2,35) from said first face, wherein said separator means (21,38) includes a blade member disposed to face to said first face of said body (2a,35) and said blade member has a blade edge to be; inserted between said body and said covering portion (3d,37)
pressing said unit (2,35) on said separator means (21,38), while said unit (2,35) is conveyed with the longitudinal direction of said first face oriented along the conveying direction (A), said separator means (21,38) being inserted between said first face and said covering portion (3d,37) so as to open said covering portion (3d,37); and
pressing a second face of said body (2a,35a) opposite to said first face of said body (2a,35a) of said unit (2,35) when uncovered, so as to press said body (2a,35a) out of said packaging (3,36) through said opening where said covering portion (3d,37) is opened,
**characterized in that**
said blade edge has an inclination on a face opposite to said body (2a,35a).

2. A removing method as defined in claim 1, wherein said first face of said body (2a,35a) is faced in a predetermined direction while conveyed.

3. A removing method as defined in claim 1 or 2, wherein said unit (2,35) while conveyed is so regulated that said first face and said covering portion (3d,37) are positioned for receiving said separator means (21,38).

4. A removing method as defined in any of claims 1 to 3, wherein said covering portion (3d,37,41a), when opened, is bent back so as to open said opening fully.

5. A removing method as defined in any of claims 1 to 4, wherein said unit (2,35) is shaped as a tetragonal prism.

6. A removing method as defined in any of claims 1 to 5, wherein said packaging (3,36) has a second opening at said second face of said body (2a,35a), and a pressing member (31) is inserted into said second opening while said packaging (3,36) is immovably held, so as to press said body (2a,35a) out.

7. A removing method as defined in any of claims 1 to 6, wherein said blade edge is tapered triangularly, and blade member further includes an auxiliary blade projected like a plate in opposition to said body (2a,35a).

8. A removing method as defined in any of claims 1 to 7, wherein said unit is a single-use camera (2,35) from which photo film after exposure is removed, said covering portion (3d,37) constitutes a rear of said single-use camera (2,35), and a lens holder for holding a lens of said single-use camera (2,35) is fitted in said second opening.

9. A removing method as defined in claim 8, wherein said single-use camera includes:
a photo film winding wheel disposed rotatably and arranged to feed said photo film frame after frame; and a recess formed to retract from a rear, said winding wheel being projected rearward but contained inside said recess.

10. A removing method as defined in any of claims 1 to 9, wherein at least one flap portion (3a,3b,3c) is formed at said opening in said packaging (3) and arranged to adhere to said covering portion (3d), and said separator means (21) peels away said covering portion (3d) from said flap portion (3a,3b,3c).

11. A removing method as defined in any of claims 1 to 10, wherein at least one flap portion (37a,37b,37c) is formed on said covering portion (37) and arranged to adhere to an edge of said opening in said packaging (36), and said separator means (21) separates said covering portion (37) from said packaging (36) by cutting away said flap portion (37a,37b,37c) from said covering portion (37).

12. An apparatus for removing a body (2a,35a) of a unit (2,35) from a packaging (3) of said unit (2,35), said body (2a,35a) having at least a first face which is substantially flat, said packaging (3) including an opening and a covering portion (3d,37), for covering said first face, said opening and said covering portion (3d,37) being adjacent to said first face in an initial state in which said body (2a,35a) is packaged in said packaging (3), said apparatus comprising:
conveyor means (15) for conveying said unit with the longitudinal direction of said first face oriented along the conveying direction (A);
stationary separator means (21,38) for separating said covering portion (3d,37) of said unit (2,35) from said first face when said unit (2,35) is pressed on said separator means (21,38) while being conveyed by said conveyor means (15), said separator means (21,38) being arranged to be inserted between said first face and said covering portion (3d,37) so as to open said covering portion (3d,37), wherein said separator means (21,38) includes a blade member disposed to face to said first face of said body (2a,35a) and said blade member has a blade edge arranged to be inserted between said body (2a,35a) and said covering portion (3d,37); and
pressing means (31) for pressing a second face of said body (2a,35a) opposite to said first face of said body (2a,35a) of said unit (2,35) when uncovered, so as to press said body (2a,35a) out of said packaging (3) through said opening where said covering portion (3d,37) is opened
**characterized in that**
said blade edge has an inclination on a face opposite to said body (2a,35a).

13. A removing apparatus as defined in claim 12, wherein said first face of said body (2a,35a) is faced in a predetermined direction while conveyed.

14. A removing apparatus as defined in claim 12 or 13, further comprising regulating means (18a,18b,19) for regulating said unit (2,35) while conveyed, so that said first face and said covering portion (3d,37) are positioned for receiving said separator means (18a,18b,19).

15. A removing apparatus as defined in any of claims 12 to 14, including bender means (26b,27b) for bending said covering portion (3d,37), when opened, so as to open said opening fully.

16. A removing apparatus as defined in any of claims 12 to 15, wherein said packaging (3,36) has a second opening at said second face of said body (2a,35a), and said pressing means (31) is arranged to be inserted into said second opening while said packaging (3,36) is immovably held, so as to press said body (2a,35a) out.

17. A removing apparatus as defined in any of claims 12 to 15, wherein said blade edge is tapered triangularly, and blade member further includes an auxiliary blade projected like a plate in opposition to said body (2a,35a).

18. A removing apparatus as defined in any of claims 12 to 17, wherein said unit is a single-use camera (2,35) from which photo film after exposure is removed, said covering portion (3d,37) constitutes a rear of said single-use camera (2,35), and a lens holder for holding a lens of said single-use camera (2,35) is fitted in said second opening.

19. A removing apparatus as defined in claim 18, wherein said single-use camera (2,35) includes:
a photo film winding wheel disposed rotatably and arranged to feed said photo film frame after frame; and
a recess formed to retract from a rear, said winding wheel being projected rearward but contained inside said recess.

20. A removing apparatus as defined in any of claims 12 to 19, wherein at least one flap portion (3a,3b,3c) is formed at said opening in said packaging (3) and arranged to adhere to said covering portion (3d), and said separator means is arranged to (21) peel away said covering portion (3d) from said flap portion (3a,3b,3c).

21. A removing apparatus as defined in any of claims 12 to 20, wherein at least one flap portion (37a,37b,37c) is formed on said covering portion (37) and arranged to adhere to an edge of said opening in said packaging (36), and said separator means (21) is arranged to separate said covering portion (37) from said packaging (36) by cutting away said flap portion (37a,37b,37c) from said covering portion (37).

## Patentansprüche

1. Verfahren zum Entfernen eines Körpers (2a, 35a) einer Einheit (2, 35) von einer Verpackung (3, 36) der Einheit (2, 35), wobei der Körper (2a, 35a) zumindest eine erste Fläche hat, die im Wesentlichen flach ist, wobei die Verpackung (3, 36) eine Öffnung und einen abdeckenden Bereich (3d, 37) zum Bedecken der ersten Fläche hat, wobei die Öffnung und der abdeckende Bereich (3d, 37) angrenzend an die erste Fläche in einem ursprünglichen Zustand sind, in dem der Körper (2a, 37a) in der Verpackung (3, 36) verpackt ist, wobei das Verfahren die folgenden Schritte umfasst:
Anbringen von stationären Trennmitteln (21, 38), um den abdeckenden Bereich (3d, 37) der Einheit (2, 35) von der ersten Fläche zu entfernen, wobei das Trennmittel (21, 38) ein Klingenelement umfasst, das so angeordnet ist, um der ersten Fläche des Körpers (2a, 35a) entgegenzuweisen, und wobei das Klingenelement eine Klingenkante hat, die zwischen den Körper und den abdeckenden Bereich (3d, 37) eingefügt werden soll;
Drücken der Einheit (2, 35) auf das Trennmittel (21, 38), während die Einheit (2, 35) mit der longitudinalen Richtung der ersten Fläche entlang der Beförderungsrichtung (A) orientiert befördert wird, wobei das Trennmittel (21, 38) zwischen die erste Fläche und den abdeckenden Bereich (3d, 37) eingefügt wird, um den abdeckenden Bereich (3d, 37) zu öffnen; und
Drücken einer zweiten Fläche des Körpers (2a, 35a) gegenüberliegend zu der ersten Fläche des Körpers (2a, 35a) der Einheit (2, 35), wenn dieser freigelegt ist, um den Körper (2a, 35a) aus der Verpackung (3, 36) durch die Öffnung zu drücken, wenn der abdeckende Bereich (3d, 37) geöffnet ist,
**dadurch gekennzeichnet,** dass
die Klingenkante eine Neigung auf einer Fläche gegenüberliegend zu dem Körper (2a, 35) hat.

2. Verfahren zum Entfernen gemäß der Definition in Anspruch 1,
**dadurch gekennzeichnet,** dass
die erste Fläche des Körpers (2a, 35a) in eine vorgegebene Richtung während der Beförderung ausgerichtet ist.

3. Verfahren zum Entfernen nach der Definition in Anspruch 1 oder 2,
**dadurch gekennzeichnet,** dass
die Einheit (2, 35) während der Beförderung so reguliert wird, dass die erste Fläche und der abdeckende Bereich (3d, 37) positioniert werden, um das Trennmittel (21, 38) aufzunehmen.

4. Verfahren zum Entfernen nach der Definition in einem der Ansprüche 1 bis 3,
**dadurch gekennzeichnet,** dass
der abdeckende Bereich (3d, 37), wenn er geöffnet wird, nach hinten gebogen wird, um die Öffnung vollständig zu öffnen.

5. Verfahren zum Entfernen nach der Definition in einem der Ansprüche 1 bis 4,
**dadurch gekennzeichnet,** dass
die Einheit (2, 35) wie ein tetragonales Prisma geformt ist.

6. Verfahren zum Entfernen nach der Definition in einem der Ansprüche 1 bis 5,
**dadurch gekennzeichnet,** dass
die Verpackung (3, 36) eine zweite Öffnung an der zweiten Fläche des Körpers (2a, 35a) hat und ein Presselement (31) in die zweite Öffnung eingeführt wird, während die Verpackung (3, 36) unbewegbar gehalten wird, um den Körper (2a, 35a) herauszupressen.

7. Verfahren zum Entfernen nach der Definition in einem der Ansprüche 1 bis 6,
**dadurch gekennzeichnet,** dass
die Klingenkante dreieckförmig spitz zuläuft und das Klingenelement weiterhin eine zusätzliche Klinge umfasst, die wie eine Platte in Opposition zum Körper (2a, 35a) vorsteht.

8. Verfahren zum Entfernen nach der Definition in einem der Ansprüche 1 bis 7,
**dadurch gekennzeichnet,** dass
eine Einwegkamera (2, 35) verwendet wird, von der ein Fotofilm nach der Belichtung entfernt wird, wobei der abdeckende Bereich (3d, 37) eine Rückseite der Einwegkamera (2, 35) darstellt und wobei ein Linsenhalter für das Halten einer Linse der Einwegkamera (2, 35) in die zweite Öffnung eingepasst ist.

9. Verfahren zum Entfernen nach der Definition in Anspruch 8,
**dadurch gekennzeichnet,** dass
die Einwegkamera umfasst:
ein Rad zum Wickeln des Fotofilms, welches rotierbar angebracht ist und ausgestaltet ist, um den Fotofilm Bild für Bild zu wickeln; und
eine Vertiefung, die zurückgezogen von einer Rückseite ausgeformt ist, wobei das Rad zum Wickeln rückwärts vorsteht, aber im Inneren der Vertiefung enthalten ist.

10. Verfahren zum Entfernen nach der Definition in einem der Ansprüche 1 bis 9,
**dadurch gekennzeichnet,** dass
zumindest ein klappbarer Bereich (3a, 3b, 3c) an der Öffnung in der Verpackung (3) ausgebildet ist und ausgestaltet ist, um an dem abdeckenden Bereich (3d) zu kleben, wobei das Trennmittel (21) den abdeckenden Bereich (3d) von dem klappbaren Bereich (3a, 3b, 3c) abschält.

11. Verfahren zum Entfernen nach der Definition in einem der Ansprüche 1 bis 10,
**dadurch gekennzeichnet,** dass
zumindest ein klappbarer Bereich (37a, 37b, 37c) auf dem abdeckenden Bereich (37) gebildet und so angeordnet ist, um an einer Kante der Öffnung in der Verpackung (36) zu kleben, wobei das Trennmittel (21) den abdeckenden Bereich (37) von der Verpackung (36) trennt, indem der klappbare Bereich (37a, 37b, 37c) von dem abdeckenden Bereich (37) abgeschnitten wird.

12. Vorrichtung zum Entfernen eines Körpers (2a, 35a) einer Einheit (2, 35) von einer Verpackung (3) der Einheit (2, 35), wobei der Körper (2a, 35a) zumindest eine erste Fläche hat, die im Wesentlichen flach ist, wobei die Verpackung (3) eine Öffnung und einen abdeckenden Bereich (3d, 37) zum Bedecken der ersten Fläche umfasst, wobei die Öffnung und der abdeckende Bereich (3d, 37) angrenzend an die erste Fläche in einem ursprünglichen Zustand sind, in dem der Körper (2a, 35a) in der Verpackung (3) verpackt ist, wobei die Vorrichtung folgendes umfasst:
Beförderungsmittel (15) für das Befördern der Einheit mit der longitudinalen Richtung der ersten Fläche entlang der Beförderungsrichtung (A) orientiert;
stationäre Trennmittel (21, 38) für das Trennen des abdeckenden Bereichs (3d, 37) der Einheit (2, 35) von der ersten Fläche, wenn die Einheit (2, 35) gegen das Trennmittel (21, 38) gepresst wird, während sie durch das Beförderungsmittel (15) befördert wird, wobei das Trennmittel (21, 38) so angeordnet ist, um zwischen der ersten Fläche und dem abdeckenden Bereich (3d, 37) eingeführt zu werden, um den abdeckenden Bereich (3d, 37) zu öffnen, wobei das Trennmittel (21, 38) eine Klingeneinheit umfasst, die so angeordnet ist, um der ersten Fläche des Körpers (2a, 35a) entgegenzuweisen und wobei das Klingenelement eine Klingenkante hat, die angeordnet ist, um zwischen dem Körpers (2a, 35a) und dem abdeckenden Bereich (3d, 37) eingeführt zu werden; und
Pressmittel (31) für das Pressen einer zweiten Fläche des Körpers (2a, 35a) gegenüberliegend zu der ersten Fläche des Körpers (2a, 35a) der Einheit (2, 35), wenn dieser freigelegt ist, um den Körper (2a, 35a) aus der Verpackung (3) durch die Öffnung zu pressen, wenn der abdeckende Bereich (3d, 37) geöffnet ist,
**dadurch gekennzeichnet,** dass
die Klingenkante eine Neigung auf einer Fläche gegenüberliegend zu dem Körper (2a, 35a) hat.

13. Vorrichtung zum Entfernen nach der Definition in Anspruch 12,
**dadurch gekennzeichnet,** dass
die erste Fläche des Körpers (2a, 35a) während der Beförderung in eine vorgegebene Richtung weist.

14. Vorrichtung zum Entfernen nach der Definition in Anspruch 12 oder 13,
die weiterhin ein Regulierungsmittel (18a, 18b, 19) umfasst, um die Einheit (2, 35) während der Beförderung so zu regulieren, dass die erste Fläche und der abdeckende Bereich (3d, 37) für das Aufnehmen des Trennmittels (18a, 19) positioniert werden.

15. Vorrichtung zum Entfernen nach der Definition in einem der Ansprüche 12 bis 14, die ein Biegemittel (26b, 27b) umfasst, um den abdeckenden Bereich (3d, 37) zu biegen, wenn er geöffnet wird, um die Öffnung vollständig zu öffnen.

16. Vorrichtung zum Entfernen nach der Definition in einem der Ansprüche 12 bis 15,
**dadurch gekennzeichnet,** dass
die Verpackung (3, 36) eine zweite Öffnung an der zweiten Fläche des Körpers (2a, 35a) hat und das Pressmittel (31) so angeordnet ist, um in die zweite Öffnung eingeführt zu werden, während die Verpackung (3, 36) unbewegbar gehalten wird, um den Körper (2a, 35a) herauszupressen.

17. Vorrichtung zum Entfernen nach der Definition in einem der Ansprüche 12 bis 15,
**dadurch gekennzeichnet,** dass
die Klingenkante dreieckförmig spitz zuläuft und das Klingenelement weiterhin eine zusätzliche Klinge umfasst, die wie eine Platte entgegengesetzt zu dem Körper (2a, 35a) vorsteht.

18. Vorrichtung zum Entfernen nach der Definition in einem der Ansprüche 12 bis 17,
**dadurch gekennzeichnet,** dass
die Einheit eine Einwegkamera (2, 35) ist, von der der Fotofilm nach der Belichtung entfernt wird, wobei der abdeckende Bereich (3d, 37) eine Rückseite der Einwegkamera (2, 35) darstellt und ein Linsenhalter für das Halten einer Linse der Einwegkamera (2, 35) in die zweite Öffnung eingepasst ist.

19. Vorrichtung zum Entfernen nach der Definition in Anspruch 18,
**dadurch gekennzeichnet,** dass
die Einwegkamera (2, 35) umfasst:
ein Rad zum Wickeln des Fotofilms, das rotierbar angeordnet ist und angebracht ist, um den Fotofilm Bild für Bild zu wickeln; und
eine Vertiefung, die von einer Rückseite zurückstehend gebildet ist, wobei das Rad zum Wickeln nach hinten vorsteht, aber innerhalb der Vertiefung enthalten ist.

20. Vorrichtung zum Entfernen nach der Definition in einem der Ansprüche 12 bis 19,
**dadurch gekennzeichnet,** dass
zumindest ein klappbarer Bereich (3a, 3b, 3c) an der Öffnung in der Verpackung (3) gebildet und ausgestaltet ist, um an dem abdeckenden Bereich (3d) zu kleben, und wobei das Trennmittel (21) angeordnet ist, um den abdeckenden Bereich (3d) von dem klappbaren Bereich (3a, 3b, 3c) abzuschälen.

21. Vorrichtung zum Entfernen nach der Definition in einem der Ansprüche 12 bis 20,
**dadurch gekennzeichnet,** dass
zumindest ein klappbarer Bereich (37a, 37b, 37c) auf dem abdeckenden Bereich (37) gebildet ist und angeordnet ist, um mit einer Kante der Öffnung in der Verpackung (36) zu verkleben, und wobei das Trennmittel (21) angeordnet ist, um den abdeckenden Bereich (37) von der Verpackung (36) zu trennen, indem der klappbare Bereich (37a, 37b, 37c) von dem abdeckenden Bereich (37) weggeschnitten wird.

## Revendications

1. Procédé d'extraction d'un corps (2a, 35a) d'une unité (2, 35) d'un conditionnement (3, 36) de l'unité (2, 35), le corps (2a, 35a) ayant au moins une première face qui est pratiquement plate, le conditionnement (3, 36) comprenant une ouverture et une partie (3d, 37) de couverture de la première face, l'ouverture et la partie de couverture (3d, 37) étant adjacentes à la première face à un état initial dans lequel le corps (2a, 35a) est emballé dans le conditionnement (3, 36), le procédé comprenant les étapes suivantes :
la disposition d'un dispositif séparateur fixe (21, 38) destiné à séparer la partie de couverture (3d, 37) de l'unité (2, 35) de la première face, telle que le dispositif séparateur (21, 38) comprend un organe à lame disposé afin qu'il soit tourné vers la première face du corps (2a, 35a) et l'organe à lame a un bord de lame destiné à être inséré entre le corps et la partie de couverture (3d, 37),
l'application d'une pression à l'unité (2, 35) sur le dispositif séparateur (29, 38) lorsque l'unité (2, 35) est transportée avec la direction longitudinale de la première face orientée dans la direction de transport (A), le dispositif séparateur (21, 38) étant inséré entre la première face et la partie de couverture (3d, 37) afin que la partie de couverture (3d, 37) soit ouverte, et
l'application d'une pression à une seconde face du corps (2a, 35a) qui est opposée à la première face du corps (2a, 35a) de l'unité (2, 35) lorsqu'elle est découverte, afin que le corps (2a, 35a) soit chassé du conditionnement (3, 36) par l'ouverture par pression lorsque la partie de couverture (3d, 37) est ouverte,
caractérisé en ce que
le bord de lame a une inclinaison sur une face opposée au corps (2a, 35a).

2. Procédé d'extraction selon la revendication 1, dans lequel la première face du corps (2a, 35a) est tournée en direction prédéterminée lors du transport.

3. Procédé d'extraction selon la revendication 1 ou 2, dans lequel l'unité (2, 35) lors de son transport est régulée afin que la première face et la partie de couverture (3d, 37) soit positionnée pour la réception du dispositif séparateur (21, 38).

4. Procédé d'extraction selon l'une quelconque des revendications 1 à 3, dans lequel la partie de couverture (3d, 37, 41a), lorsqu'elle est ouverte, est courbée vers l'arrière afin qu'elle ouvre totalement l'ouverture.

5. Procédé d'extraction selon l'une quelconque des revendications 1 à 4, dans lequel l'unité (2, 35) a la forme d'un prisme tétragonal.

6. Procédé d'extraction selon l'une quelconque des revendications 1 à 5, dans lequel le conditionnement (3, 36) a une seconde ouverture à la seconde face du corps (2a, 35a), et un organe de pression (31) est inséré dans la seconde ouverture alors que le conditionnement (3, 36) est maintenu immobile, afin que le corps (2a, 35a) soit chassé par une pression.

7. Procédé d'extraction selon l'une quelconque des revendications 1 à 6, dans lequel le bord de lame a une inclinaison triangulaire, et l'organe à lame comporte en outre une lame auxiliaire qui dépasse à la manière d'une plaque en face du corps (2a, 35a).

8. Procédé d'extraction selon l'une quelconque des revendications 1 à 7, dans lequel l'unité est un appareil photographique non réutilisable (2, 35) dont la pellicule photographique est retirée après exposition, la partie de couverture (3d, 37) constitue l'arrière de l'appareil photographique non réutilisable (2, 35), et un support d'objectif qui supporte l'objectif de l'appareil photographique non réutilisable (2, 35) est monté dans la seconde ouverture.

9. Procédé d'extraction selon la revendication 8, dans lequel l'appareil photographique non réutilisable comprend :
une roue d'enroulement de pellicule photographique disposée afin qu'elle puisse tourner et destinée à faire avancer la pellicule photographique image par image, une cavité formée afin qu'elle soit en retrait par rapport à l'arrière, la roue d'enroulement dépassant en arrière mais en étant contenue dans la cavité.

10. Procédé d'extraction selon l'une quelconque des revendications 1 à 9, dans lequel une partie au moins de rabat (3a, 3b, 3c) est formée au niveau de l'ouverture dans le conditionnement (3) et est disposée afin qu'elle adhère à la partie de couverture (3d), et le dispositif séparateur (21) sépare par pelage la partie de couverture (3d) de la partie de rabat (3a, 3b, 3c).

11. Procédé d'extraction selon l'une quelconque des revendications 1 à 10, dans lequel une partie au moins de rabat (37a, 37b, 37c) est formée dans la partie de couverture (37) et est destinée à adhérer à un bord de l'ouverture dans le conditionnement (36), et le dispositif séparateur (21) sépare la partie de couverture (37) du conditionnement (36) par découpe de la partie de rabat (37a, 37b, 37c) de la partie de couverture (37).

12. Appareil d'extraction d'un corps (2a, 35a) d'une unité (2, 35) d'un conditionnement (3) de l'unité (2, 35), le corps (2a, 35a) ayant au moins une première face qui est pratiquement plate, le conditionnement (3) comprenant une ouverture et une partie de couverture (3d, 37) destinée à couvrir la première face, l'ouverture et la partie de couverture (3d, 37) étant adjacentes à la première face à un état initial dans lequel le corps (2a, 35a) est emballé dans le conditionnement (3), l'appareil comprenant :
un dispositif transporteur (15) destiné à transporter l'unité, la direction longitudinale de la première face étant orientée dans la direction de transport (A),
un dispositif séparateur fixe (21, 38) destiné à séparer la partie de couverture (3d, 37) de l'unité (2, 35) de la première face lorsque l'unité (2, 35) est repoussée par pression sur le dispositif séparateur (21, 38) tout en étant transportée par le dispositif transporteur (15), le dispositif séparateur (21, 38) étant destiné à être inséré entre la première face et la partie de couverture (3d, 37) afin qu'il ouvre la partie de couverture (3d, 37), dans lequel le dispositif séparateur (21, 38) comporte un organe à lame destiné à être tourné vers la première face du corps (2a, 35a) et l'organe à lame a un bord de lame destiné à être inséré entre le corps (2a, 35a) et la partie de couverture (3d, 37), et
un dispositif de pression (31) destiné à exercer une pression sur une seconde face du corps (2a, 35a) opposée à la première face du corps (2a, 35a) de l'unité (2, 35) lorsqu'elle est découverte, afin que le corps (2a, 35a) soit extrait par pression du conditionnement (3) par ladite ouverture lorsque la partie de couverture (3d, 37) est ouverte,
caractérisé en ce que
le bord de lame a une inclinaison sur une face opposée au corps (2a, 35a).

13. Appareil d'extraction selon la revendication 12, dans lequel la première face du corps (2a, 35a) est tournée en direction prédéterminée pendant le transport.

14. Appareil d'extraction selon la revendication 12 ou 13, comprenant en outre un dispositif de régulation (18a, 18b, 19) destiné à réguler l'unité (2, 35) lors du transport, si bien que la première face et la partie de couverture (3d, 37) sont positionnées pour la réception du dispositif séparateur (18a, 18b, 19).

15. Appareil d'extraction selon l'une quelconque des revendications 12 à 14, comprenant un dispositif de courbure (26b, 27b) destiné à courber la partie de couverture (3d, 37) lorsqu'elle est ouverte afin que l'ouverture soit totalement ouverte.

16. Appareil d'extraction selon l'une quelconque des revendications 12 à 15, dans lequel le conditionnement (3, 36) a une seconde ouverture à la seconde face du corps (2a, 35a), et le dispositif de pression (31) est destiné à être inséré dans la seconde ouverture lorsque le conditionnement (3, 36) est maintenu sous forme immobile, afin que le corps (2a, 35a) soit chassé par pression.

17. Appareil d'extraction selon l'une quelconque des revendications 12 à 15, dans lequel le bord de lame est incliné sous forme triangulaire, et l'organe à lame comprend en outre une lame auxiliaire qui dépasse à la manière d'une plaque en face du corps (2a, 35a).

18. Appareil d'extraction selon l'une quelconque des revendications 12 à 17, dans lequel l'unité est un appareil photographique non réutilisable (2, 35) dont la pellicule photographique est retirée après exposition, la partie de couverture (3d, 37) constitue l'arrière de l'appareil photographique non réutilisable (2, 35), et un support d'objectif destiné à supporter un objectif de l'appareil photographique non réutilisable (2, 35) est logé dans la seconde ouverture.

19. Appareil d'extraction selon la revendication 18, dans lequel l'appareil photographique non réutilisable (2, 35) comporte :
une roue d'enroulement de pellicule photographique disposée afin qu'elle puisse tourner et destinée à faire avancer la pellicule photographique image par image, et
une cavité formée en retrait par rapport à l'arrière, la roue d'enroulement dépassant vers l'arrière mais étant logée à l'intérieur de cette cavité.

20. Appareil d'extraction selon l'une quelconque des revendications 12 à 19, dans lequel une partie de rabat au moins (3a, 3b, 3c) est formée au niveau de l'ouverture du conditionnement (3) et est destinée à adhérer à la partie de couverture (3d), et le dispositif séparateur (21) est destiné à séparer la partie de couverture (3d) de la partie de rabat (3a, 3b, 3c) par pelage.

21. Appareil d'extraction selon l'une quelconque des revendications 12 à 20, dans lequel une partie de rabat au moins (37a, 37b, 37c) est formée sur la partie de couverture (37) et est destinée à adhérer à un bord de l'ouverture dans le conditionnement (36), et le dispositif séparateur (21) est destiné à séparer la partie de couverture (37) du conditionnement (36) par éloignement de la partie de rabat (37a, 37b, 37c) de la partie de couverture (37) par découpe.
